# EUROPEAN PATENT SPECIFICATION

(11) **EP 0 923 488 B1**
(45) Date of publication and mention of the grant of the patent: **24.04.2002**
(21) Application number: 97937092.1
(22) Date of filing: 01.08.1997
(51) Int. Cl.: B64D 27/26

(54) **DETACHABLE INTEGRAL AIRCRAFT TAILCONE AND POWER ASSEMBLY**
ABNEHMBARE INTEGRIERTE FLUGZEUGHECKKONUS UND -HILFSKRAFTEINHEIT
ENSEMBLE INTEGRE CONE ARRIERE/GROUPE AUXILIAIRE DEMONTABLE

(30) Priority: 02.08.1996 US 23080 P
(43) Date of publication of application: 23.06.1999
(60) Divisional application: 00100172.6
(73) Proprietor: Honeywell International Inc., Morristown, New Jersey 07962 (US)
(72) Inventor: LISTON, Laurence, D., N., Gilbert, AZ 85233 (US); SCHOEPF, Joseph, L., Phoenix, AZ 85048 (US); ROYALTY, Charles, Michael, Tempe, AZ 85282 (US)
(74) Representative: Brunner, Michael John
(86) International application number: US9713591
(87) International publication number: WO9805553

(56) References cited:
- EP-A- 0 272 822
- GB-A- 1 135 100
- US-A- 2 783 003
- US-A- 3 397 855
- US-A- 4 044 973

## Description

### TECHNICAL FIELD

This invention relates generally to an aircraft tailcone. More particularly, the present invention relates to a detachable integral aircraft tailcone and power unit assembly configured for quick attachment to and removal from an aircraft.

### BACKGROUND OF THE INVENTION

Modem turboprop and turbofan powered aircraft carry a gas turbine engine known as an auxiliary power unit (APU) in addition to the main propulsion engines. The APU serves two main functions: to provide power to aircraft systems when the main engines are not running, and to enable starting the main engines without need for external power. In many business class aircraft and in aircraft used by smaller regional airlines, the APU is mounted in the tail end of the fuselage generally known as the tailcone. Typically, the engine supplier and tailcone casing supplier coordinate with the aircraft manufacturer in the installation of the APU at the manufacturer's facility. The APU is custom fit and mounted to the aircraft, and all accessories such as electrical, pneumatic, and fuel, are routed to the APU and connected. The tailcone casing supplier then fits and installs the casing, usually including an openable or removable panel for access to portions of the APU.

A problem with this kind of APU installation is the large amount of the time and expense involved in completing an installation. The mounting of the APU and routing and connection of accessories requires substantial effort by skilled technicians and engineers from the aircraft manufacturer and APU supplier. Fitting and attaching the casing requires technical support from the tailcone casing supplier as well. A complete installation can take days or even weeks at the aircraft manufacturer's facility resulting in substantial cost and inconvenience.

Another problem results from inaccessibility of the APU once the casing is in place. Typically the casing comprises two large panels that are attached to one another and to the aircraft using numerous screws. The casing includes at least one small openable door for providing access to routinely monitored items such as the oil sight glass. However, for anything beyond the routine day to day maintenance it becomes necessary to remove at least one of the large casing panels. Removal of just the screws holding the panels together can take thirty minutes or longer. The time spent on removing and reinstalling the tailcone casing can become particularly inconvenient and costly when it results in unplanned delay to scheduled flights.

Accordingly, a need exists for a system that substantially reduces the time and labor required to install and test an APU and tailcone casing onto an aircraft. Another need exists for a tailcone casing that provides quick access to the entire APU mounted therein.

### SUMMARY OF THE INVENTION

In view of the above, it is an object for this invention to provide a system that substantially reduces the time and labor required to install an APU and tailcone casing onto an aircraft, and to provide a tailcone casing giving quick access to the entire APU mounted within.

GB-A-1 135 100 discloses an aircraft tailcone assembly including a gas turbine engine having an inlet and an exhaust; a firewall disposed forward of the engine; at least one curved casing; and interface means for making necessary electrical, mechanical, pneumatic, and hydraulic accessory connections between the tailcone assembly and an aircraft body, as defined in the preamble of claim 1.

The present invention provides a detachable integral aircraft tailcone and power assembly mountable to the body of an aircraft using a height adjustable dolly. The tailcone assembly according to claim 1 is characterised over the prior art mentioned above by a longitudinal support member having forward and aft axial ends, the gas turbine engine being mounted to the support member within the tailcone assembly, and the firewall extending from said support member; the at least one curved casing being rotatably and hingeably connected to the support member and rotatable from a closed position to an open position to expose the engine; an inlet duct extending from an aperture in one of said rotatable casings to the engine inlet; and a flange at said forward axial end of said support member for enabling quick and rigid attachment of the entire tailcone assembly to the aircraft body.

The integral aircraft tailcone may also include an integrated exhaust muffler.

The tailcone assembly is installed on the aircraft by mounting the tailcone in the adjustable dolly, rolling the dolly up to the aircraft, adjusting the dolly until the taitcone assembly is properly aligned for attachment to the aircraft, connecting the engine accessories to the aircraft, and bolting the tailcone to the aircraft.

These and other objects, features and advantages of the present invention are specifically set forth in or will become apparent from the following detailed description of a preferred embodiment of the invention when read in conjunction with the accompanying drawings.

### BRIEF DESCRIPTION OF THE DRAWINGS

Fig. 1 depicts a perspective view of the tailcone assembly contemplated by the present invention.

Fig. 1A depicts an enlarged fragmented cross-sectional view of an encircled portion of Fig. 1.

Fig. 2 depicts a perspective view of the support member portion of the taiicone assembly of Fig. 1.

Fig. 3 depicts a partially cross sectional partially cutaway side view of the tailcone assembly contemplated by the present invention.

Fig. 4 depicts a fragmented cross-sectional view of the integral inlet duct.

Fig. 5 depicts an enlarged fragmentary sectional view of an encircled portion of Fig. 1.

Fig. 6A depicts a side view of an integral tailcone and power assembly mounted in an installation dolly as contemplated by the present invention.

Fig. 6B depicts an aft looking forward view of the tailcone assembly and installation dolly of FIG. 6A.

Fig. 6C depicts a top looking down view of the tailcone assembly and installation dolly of FIG. 6A.

### DESCRIPTION OF THE PREFERRED EMBODIMENT

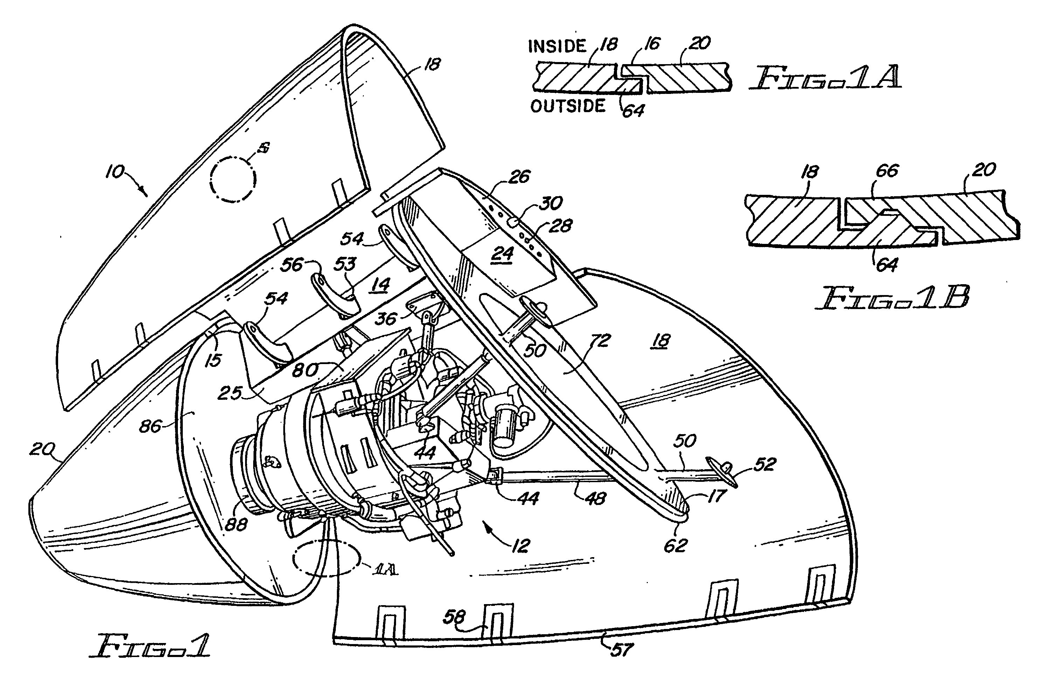

The integral tailcone and power assembly of the subject invention is indicated generally by the numeral 10 in FIG. 1. The tailcone assembly 10 comprises generally a gas turbine engine 12 mounted from a support member 14, two rotatable casing halves 18 hingeably mounted to support member 14, a firewall 17, and an integral exhaust cone 20 with an open aft end 21.

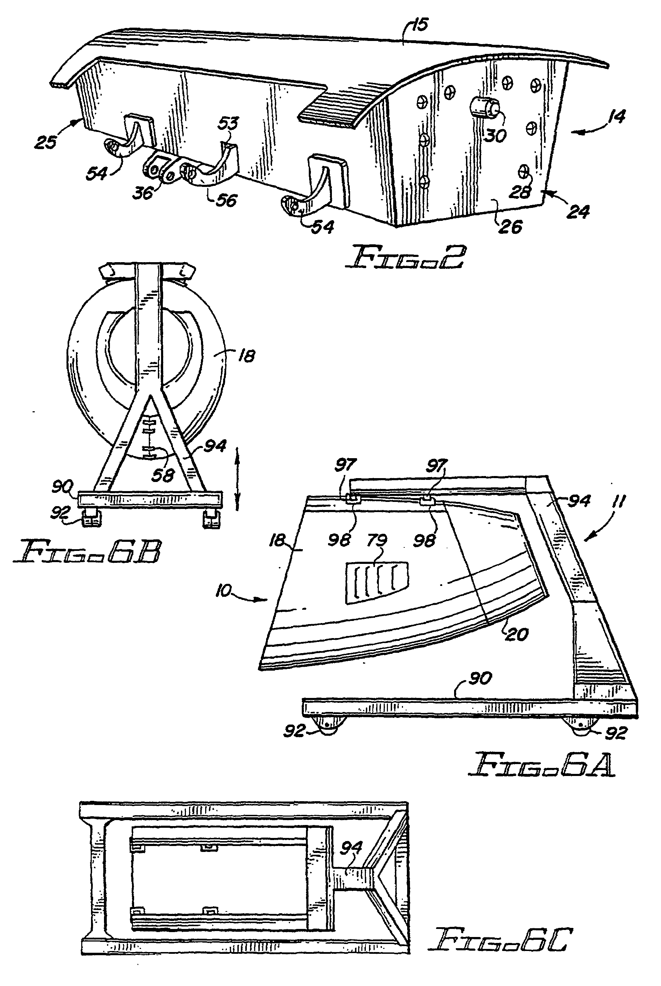

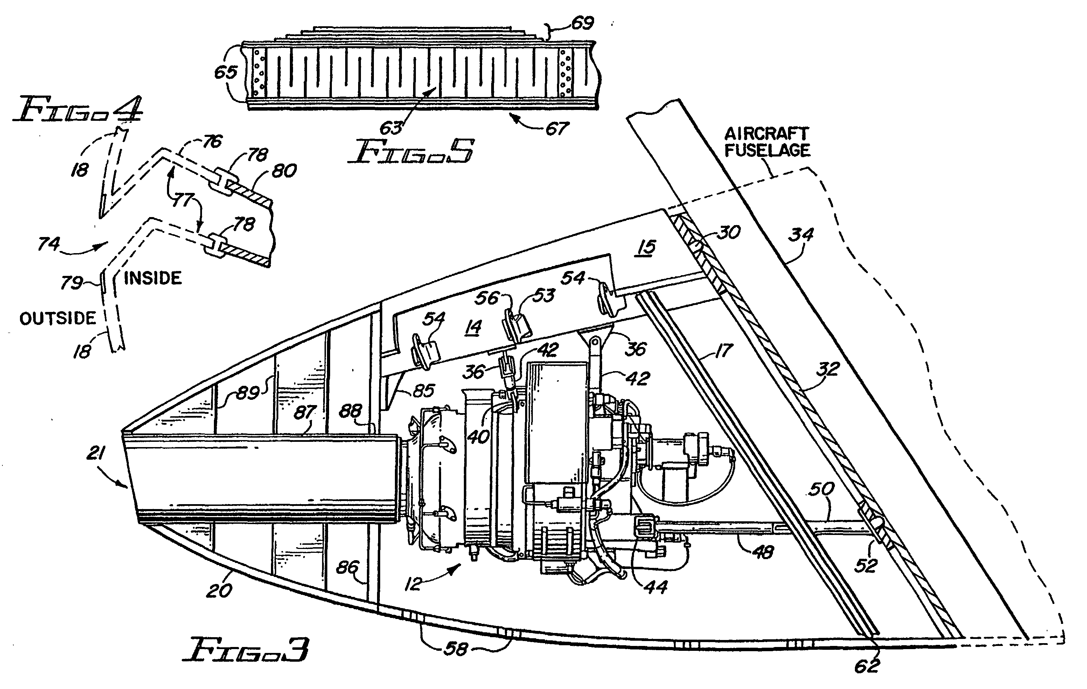

Referring to FIGS. 2 and 3, primary support for the entire tailcone assembly 10 is provided by the support member 14. The support member 14 extends longitudinally from a forward end 25 to an aft end 25. The upper surface of the support member 14 is capped by a fairing 15 contoured to define the top surface of the tailcone between the hinged edges of casing halves 18. The support member structure is thus entirely enclosed within the tailcone 10. Alternatively, the upper surface of the support member 14 may be contoured to define the top surface of the tailcone assembly. The support member construction consists of a welded box or I-beam structure preferably made from Inconel 625 sheet and plate stock. Other constructions or materials may be used depending on the particular installation.

The support member 14 is adapted for attachment to the rear bulkhead 32 and tail spar 34 of the aircraft. The forward end of support member 14 is tapered at an angle to fit the aircraft bulkhead 32, and provided with a flange 26 having bolt holes 28 and a locating pin 30. When the tailcone assembly 10 is installed, the flange 26 is bolted to the aircraft bulkhead 32, and preferably also to the tail spar 34, thereby rigidly connecting the tailcone assembly to the aircraft. The connection is designed so that the support member 14 extends roughly horizontally from the aircraft.

The support member 14 further includes mounting brackets 36 for connecting to the gas turbine engine main mounts. The engine depicted in the figures has forward and rear main mount pads indicated as 38 and 40 respectively, both located on the top side of the engine. Main mounts 38 and 40 are connected to the mounting brackets 36 through rigid links 42. It should be noted that the locations and orientations of the engine's main mounts and the support member mounting brackets 36 shown are illustrative of a typical configuration. The present invention more broadly contemplates mounting any suitable engine to a support member 14 regardless of how the engine mounts may be configured.

The engine 12 also includes two secondary mounts 44. The secondary mounts 44 are connected to the firewall 17 (described below) via struts 48. Opposite each of the struts 48, standoffs 50 extend from the firewall 17 to the aircraft. A flange 52 having an alignment pin and bolt holes is defined at the forward end of each standoff 50 for attachment to the aircraft bulkhead 32. The struts 48 and standoffs 50 are preferably configured to provide a direct load path between the secondary mounts 44 and the aircraft bulkhead 32. As with the main mounts, the location and orientation of the secondary mounts shown is merely illustrative of a typical installation, and not limiting to the mount configurations contemplated by the invention described and claimed herein.

Fire protection and access to the engine's accessories are provided by the firewall 17. The firewall 17 is rigidly connected to the support member 14 several inches rearward of flange 26, and preferably parallel with the aircraft rear bulkhead 32. A bulb seal 62 is attached to the perimeter of the firewall 17 for sealing off the engine from the aircraft. The seal 62 is itself protected by a seal retainer (not shown) extending from the firewall 17. When the rotatable casing halves 18 are closed and latched together, the seal 62 is compressed and mates with a seal land (not shown) located on each casing 18. An access panel 72 is provided in firewall 17 for routing the engine's accessory connections out of the tailcone assembly 10. All engine accessory connections may be advantageously made in the cavity between the firewall 17 and the aircraft bulkhead 32.

The rotatable casings 18 enclose almost the entire forward portion of the tailcone assembly 10. Each casing 18 extends longitudinally from the forward end of the tailcone rearward to a point approximately adjacent the engine exhaust, and wraps circumferentially all the way around to the bottom of the tailcone, abutting one another along their lower longitudinal edges 57. Four spaced apart latches 58 are used along the lower longitudinal edges 57 to latch the casings 18 to one another. Additional latches on the forward and aft edges of the rotatable casings may be used to provide additional support. Preferably latches 58 are flush with the outer surface of the casings 18 when closed and latched.

The rotatable casings 18 provide access to the entire APU for performing various engine maintenance by opening one or both sides. The casings 18 are large enough to allow for removal of the APU from the aircraft when required, such as for performing a hot section overhaul, without need for removal of any casing from the aircraft. The aft edges of the casings 18 are undercut to define a lip 64 which overlays a mating step 66 in the forward edge of the exhaust cone 20, as illustrated in FIG. 1A, thereby creating a lap joint arrangement when the rotatable casings are closed and latched. A similar undercut is provided in the forward edge of the casings 18 for overlaying the perimeter of the aircraft bulkhead 32.

The rotatable casings 18 are hingeably connected to gooseneck hinges 54 and 56 extending from support member 14. The forward and aft gooseneck hinges 54 are rigidly attached to the sides of support member 14. A single piece floating hinge 56 is disposed between fixed hinges 54, and defines the center gooseneck hinge for both casing halves 18. The floating hinge 56 comprises a single bar formed into the goosenecks at each end, free to slide laterally and vertically in a slot 53 formed in the support member 14. The floating hinge 56 self aligns with the fixed hinges 54, thereby ensuring free movement of the casing 18, and enabling alignment of casings 18 to be controlled solely by adjustment of fixed hinges 54. Alternative hinging arrangements, for example strip piano type hinges, may be used instead of the gooseneck type depending upon the constraints of the installation.

The rotatable casings 18, are preferably made of a composite skinned honeycomb sandwich construction as shown in FIG. 5. The core material in the sandwich construction is a honeycomb structure 63 typically made of either Titanium metal or Phenolic - a paper based material. The inner and outer exterior surfaces 65 of the sandwich are made of a carbon fiber reinforced plastic (CFRP). The CFRP consists of carbon fiber and a plastic matrix, where the plastic matrix may be an epoxy, bismaleimide, or polyimide; the latter having higher temperature capability. If an epoxy based CFRP is used, a thermal blanket may be required to shield the doors from engine heat. Such a thermal blanket would typically be made from woven "Teflon" or "Capton" material, and pinned to the inside of the rotatable casings. The outer external surface includes layers of copper foil or nickel mesh 67 for lightning protection. Kevlar plies may be added to the inside surface of the casings 18, and a higher density honeycomb core used adjacent the turbine and compressor wheels of the gas turbine engine for improved fragment containment. The rotatable casings 18 may alternatively be made of a suitable sheet metal, such as .040 inch thick Titanium 6AL-4V with stringer reinforcement. Casings made of Titanium or other metal do not require the addition of copper foil for lightning protection.

The tailcone assembly 10 includes means for ducting combustion air to the engine, illustrated in FIG, 4. One of the rotatable casings 18 includes an inlet aperture 74 aligned with an integral inlet conduit or duct 76 extending from the inside surface of the casing 18 to an open end adjacent the engine inlet 80. The inlet conduit 76 includes a gasket 78 at its open end such that when the casings 18 are closed and latched, inlet conduit 76 sealingly mates up with the engine inlet 80, thereby defining a duct from the engine inlet to the ambient air. Inlet conduit 76 is integral with casing 18 and preferably constructed of the same type of honeycomb composite material.

The inner surfaces of the conduit 76 receive an acoustic treatment for suppressing engine noise. The treatment comprises perforating the entire inner composite surface of the honeycomb composite with a plurality of small diameter (approximately 1/16 inch) closely spaced holes 77. Noise abatement may alternatively be achieved by incorporating a wire mesh layer known in the industry as a septum (not shown) into the honeycomb composite structure. The septum may be disposed between the inner composite surface and the honeycomb, or between two layers of honeycomb. A suitable louvered cover plate or actuated door 79 for directing air into the ducting and filtering out foreign objects is located over aperture 74. The cover plate 79 may include means for restricting the amount of airflow entering the conduit such as through adjustable louvers, or multiple positionable door.

Referring to FIG. 3, the aft most portion of the tailcone is an integral exhaust cone 20 rigidly mounted to the aft end of support member 14 by a bracket 85. The outer surface of the exhaust cone 20 defines the exterior surface of the tailcone aft of the casings 18. The exhaust cone structure comprises a tapered hollow shell, with an open aft end 21 and a bulkhead 86 at the forward end. The bulkhead 86 defines an aperture 88 adapted for sealingly connecting the exhaust cone 20 to the engine exhaust. Preferably the exhaust cone 20 is constructed of the same type of light weight honeycomb composite as the rotatable casings 18, namely either epoxy Bismaleimide or Polyimide matrix CFRP covering a honeycomb core; or alternatively a more conventional Titanium sheet and stringer construction.

Once attached to the engine exhaust, the exhaust cone 20 functions as a conduit for porting exhaust gas out of the tailcone assembly 10, taking the place of a conventional tail pipe. The exhaust cone 20 also includes means for suppressing exhaust noise such as a felt metal facesheet 87 and felt metal baffles 89. Importantly, the exhaust cone 20 acts as the outercasing for the muffler, thereby providing an integrated muffler and exhaust cone.

An adjustable height dolly 11, shown in FIGS. 6A through 6C facilitates installation and removal of the tailcone assembly 10 from an aircraft. The dolly or cart 11 includes a base portion 90 having steerable adjustable height wheels 92, and a frame portion 94 extending vertically from and overhanging the base portion. The frame portion 94 includes fittings 97 for suspending the tailcone assembly 10 from suspension points 98 located on the top of the tailcone.

With the tailcone mounted in the dolly 11, the dolly may be rolled up to the rear bulkhead of the aircraft for installation. Any required fine adjustments in mounting alignment are made by adjusting the height of wheels 92. Alternatively, any other suitable system for final height and angle adjustment of the tailcone assembly 10 may be used, such as adjustable height frame 94 or adjustable fittings 97 thereon. When adequately positioned and aligned, the engine's accessory connections are made and the tailcone 10 is bolted to the aircraft.

Various modifications and alterations of the above described detachable integral aircraft tailcone and power assembly will be apparent to those skilled in the art. Accordingly, the foregoing detailed description of the preferred embodiment of the invention should be considered exemplary in nature and not as limiting to the scope of the invention as set forth in the following claims,

## Claims

1. An aircraft tailcone assembly (10) including:
a gas turbine engine (12) having an inlet (80) and an exhaust;
a firewall (17) disposed forward of the engine;
at least one curved casing (18);
interface means for making necessary electrical, mechanical, pneumatic, and hydraulic accessory connections between the tailcone assembly and an aircraft body; **characterised by**
a longitudinal support member (14) having forward and aft axial ends (24,25), the gas turbine engine (12) being mounted to the support member within the tailcone assembly, and the firewall (17) extending from said support member (14);
the at least one curved casing (18) being rotatably and hingeably connected to the support member (14) and rotatable from a closed position to an open position to expose the engine (12);
an inlet duct (76) extending from an aperture (74) in one of said rotatable casings to the engine inlet (80); and
a flange (26) at said forward axial end of said support member for enabling quick and rigid attachment of the entire tailcone assembly (10) to the aircraft body.

2. The tailcone assembly (10) of claim 1, wherein the flange (26) is drilled (28) for mounting bolts, and including a locating pin (30) extending from said flange for facilitating alignment with the aircraft body.

3. The tailcone assembly (10) of claim 2, further comprising:
stabilizing struts (48) connecting secondary mounts (44) of the gas turbine engine (12) to the firewall (17); and
standoffs (50), opposite said stabilizing struts between said firewall and said aircraft body in use, adapted for attachment to the aircraft body.

4. The tailcone assembly (10) of claim 1, wherein two rotatable casings (18) are hingeably mounted along their longitudinal upper edges to the support member (14), the casings extending longitudinally from the forward end of the tailcone assembly, rearward to a point substantially adjacent the aft end of the engine (12), and extending circumferentially to the bottom of the tailcone assembly so as to abut one another along their lower longitudinal edges.

5. The tailcone assembly (10) of claim 4, wherein each of the rotatable casings (18) is hingeably mounted to the support member (14) with at least two gooseneck hinges (54,56).

6. The tailcone assembly (10) of claim 5, wherein the rotatable casings (18) have at least two latches (58) disposed along their longitudinal lower edges for latching the casings to one another.

7. The tailcone assembly (10) of claim 1, wherein the inlet duct comprises:
a perforated cover plate (79) mounted over the aperture (74) in the rotatable casing (18);
an integral conduit (76) aligned with the aperture and extending from the inner surface of the rotatable casing to an open end adjacent the engine inlet (80);
a gasket (78) attached to the open conduit end configured to sealingly connect the conduit to the engine inlet upon rotating the casing to the closed position.

8. The tailcone assembly (10) of claim 1, further including a substantially conical casing (20) attached to the second axial end of the support member (14) extending from a forward end approximately adjacent the engine exhaust to an open aft end (21), the casing thereby providing a passage for exhaust gas from the engine.

9. The tailcone assembly (10) of claim 8, wherein the conical casing further comprises:
a bulkhead (86) in the forward end of the casing sealingly connected to the engine exhaust; and
baffles (89) for exhaust noise suppression.

10. The tailcone assembly (10) of claim 9, wherein said conical casing (20) is made of a honeycomb composite material comprising a honeycomb core and fibre reinforced composite layers overlaying said honeycomb core, said composite layers comprising carbon fiber and plastic matrix, wherein said plastic matrix is selected from a group consisting of bismaleimide and polyimide plastics.

## Patentansprüche

1. Flugzeugheckkonusanordnung (10), die folgendes enthält:
einen Turbomotor (12) mit einem Einlaß (80) und
einem Auslaß;
ein vor dem Motor angeordnetes Brandschott (17);
mindestens ein gekrümmtes Gehäuse (18);
Anschlußmittel zur Herstellung erforderlicher elektrischer, mechanischer, pneumatischer und
hydraulischer zusätzlicher Verbindungen zwischen der Heckkonusanordnung und einem Flugzeugrumpf,
**gekennzeichnet durch**
ein Längsstützglied (14) mit einem vorderen und hinteren Axialende (24, 25), wobei der Turbomotor (12) in der Heckkonusanordnung an dem Stützglied angebracht ist, und sich das Brandschott (17) von dem Stützglied (14) erstreckt;
wobei das mindestens eine gekrümmte Gehäuse (18) drehbar und schwenkbar mit dem Stützglied (14) verbunden ist und aus einer geschlossenen Position in eine geöffnete Position gedreht werden kann, um den Motor (12) freizulegen;
einen sich von einer Öffnung (74) in einem der drehbaren Gehäuse zum Motoreinlaß (80) erstreckenden Einlaßkanal (76); und
einen Flansch (26) am vorderen Axialende des Stützglieds zur Ermöglichung einer schnellen und starren Befestigung der gesamten Heckkonusanordnung (10) am Flugzeugrumpf.

2. Heckkonusanordnung (10) nach Anspruch 1, bei der der Flansch (26) für Befestigungsschrauben gebohrt (28) ist und einen sich vom Flansch erstreckenden Positionierstift (30) zur Erleichterung der Ausrichtung auf den Flugzeugrumpf enthält.

3. Heckkonusanordnung (10) nach Anspruch 2, weiterhin mit:
Stabilisierungsstreben (48), die Sekundärhalterungen (44) des Turbomotors (12) mit dem Brandschott (17) verbinden; und
Abstandshalter (50) gegenüber den Stabilisierungsstreben zwischen dem Brandschott und dem Flugzeugrumpf im Gebrauch, die zur Befestigung am Flugzeugrumpf ausgeführt sind.

4. Heckkonusanordnung (10) nach Anspruch 1, bei der zwei drehbare Gehäuse (18) entlang ihren oberen Längsrändern am Stützglied (14) schwenkbar angebracht sind, wobei sich die Gehäuse in Längsrichtung vom vorderen Ende der Heckkonusanordnung nach hinten bis zu einer im wesentlichen neben dem hinteren Ende des Motors (12) liegenden Stelle und umfangsmäßig zum Unterteil der Heckkonusanordnung erstrecken, so daß sie entlang ihren unteren Längsrändern aneinander anstoßen.

5. Heckkonusanordnung (10) nach Anspruch 4, bei der jedes der drehbaren Gehäuse (18) mit mindestens zwei Bogenscharnieren (54, 56) am Stützglied (14) schwenkbar angebracht ist.

6. Heckkonusanordnung (10) nach Anspruch 5, bei der die drehbaren Gehäuse (18) mindestens zwei Verriegelungsglieder (58) aufweisen, die entlang ihren unteren Längständern zur Verriegelung der Gehäuse miteinander angeordnet sind.

7. Heckkonusanordnung (10) nach Anspruch 1, bei der der Einlaßkanal folgendes umfaßt:
eine über der Öffnung (74) im drehbaren Gehäuse (18) angebrachte perforierte Abdeckplatte (79);
eine auf die Öffnung ausgerichtete integrale Leitung (76), die sich von der Innenfläche des drehbaren Gehäuses zu einem offenen Ende neben dem Motoreinlaß (80) erstreckt;
eine am offenen Leitungsende befestigte Dichtung (78), die zur abdichtenden Verbindung der Leitung mit dem Motoreinlaß bei Drehung des Gehäuses in die geschlossene Position konfiguriert ist.

8. Heckkonusanordnung (10) nach Anspruch 1, weiterhin mit einem am zweiten Axialende des Stützglieds (14) befestigten im wesentlichen konischen Gehäuse (20), das sich von einem vorderen Ende im wesentlichen neben dem Motorauslaß zu einem offenen hinteren Ende (21) erstreckt, wobei das Gehäuse dadurch einen Durchgang für Abgas aus dem Motor bereitstellt.

9. Heckkonusanordnung (10) nach Anspruch 8, bei der das konische Gehäuse weiterhin folgendes umfaßt:
eine Trennwand (86) im vorderen Ende des Gehäuses, die mit dem Motorauslaß abdichtend verbunden ist; und
Prallplatten (89) zur Abgaslärmunterdrückung.

10. Heckkonusanordnung (10) nach Anspruch 9, bei der das konische Gehäuse (20) aus einem Waben-Verbundwerkstoff mit einem Wabenkern und über dem Wabenkern liegenden faserverstärkten Verbundschichten besteht, wobei die Verbundschichten Kohlefasern und eine Kunststoffmatrix umfassen, wobei letztere aus einer Gruppe bestehend aus Bismaleimid- und Polyimidkunststoffen ausgewählt ist.

## Revendications

1. Ensemble de cône arrière (10) d'aéronef, comportant :
un moteur à turbine à gaz (12) ayant une entrée (80) et un échappement ;
une cloison coupe-feu (17) disposée en avant du moteur ;
au moins un carter incurvé (18) ;
un moyen d'interfaçage assurant les connexions électriques, mécaniques, pneumatiques et
hydrauliques des accessoires entre l'ensemble de cône arrière et un fuselage d'aéronef ;
**caractérisé par**
un élément de support longitudinal (14) ayant des extrémités axiales avant et arrière (24, 25), le moteur à turbine à gaz (12) étant monté sur l'élément de support dans l'ensemble de cône arrière, et la cloison coupe-feu (17) s'étendant depuis ledit élément de support (14) ;
l'au moins un carter incurvé (18) étant connecté tournant et pivotant sur l'élément de support (14) et pouvant tourner d'une position fermée dans une position ouverte pour exposer le moteur (12) ;
un conduit d'entrée (76) s'étendant depuis une ouverture (74) dans l'un desdits carters tournants jusqu'à l'entrée (80) du moteur ; et
une bride (26) au niveau de ladite extrémité axiale avant dudit élément de support pour permettre une fixation rapide et rigide de tout l'ensemble de cône arrière (10) au fuselage de l'aéronef.

2. Ensemble de cône arrière (10) selon la revendication 1, dans lequel la bride (26) est percée (28) pour monter des boulons, et comportant une broche de positionnement (30) s'étendant depuis ladite bride pour faciliter l'alignement avec le fuselage de l'aéronef.

3. Ensemble de cône arrière (10) selon la revendication 2, comprenant en outre :
des raidisseurs stabilisants (48) connectant des fixations secondaires (44) du moteur à turbine à gaz (12) à la cloison coupe-feu (17) ; et
des entretoises (50), opposées auxdits raidisseurs stabilisants entre ladite cloison pare-feu et ledit fuselage de l'aéronef en fonctionnement, adaptées pour être fixées au fuselage de l'aéronef.

4. Ensemble de cône arrière (10) selon la revendication 1, dans lequel deux carters tournants (18) sont montés pivotants le long de leurs bords supérieurs longitudinaux sur l'élément de support (14), les carters s'étendant longitudinalement depuis l'extrémité avant de l'ensemble de cône arrière, vers l'arrière jusqu'à un point substantiellement adjacent à l'extrémité arrière du moteur (12), et s'étendant circonférentiellement jusqu'au fond de l'ensemble de cône arrière de manière à venir en butée les uns contre les autres le long de leurs bords longitudinaux inférieurs.

5. Ensemble de cône arrière (10) selon la revendication 4, dans lequel chacun des carters tournants (18) est monté pivotant sur l'élément de support (14) avec au moins deux articulations en col de cygne (54, 56).

6. Ensemble de cône arrière (10) selon la revendication 5, dans lequel les carters tournants (18) ont au moins deux attaches (58) disposées le long de leurs bords inférieurs longitudinaux pour attacher les carters les uns aux autres.

7. Ensemble de cône arrière (10) selon la revendication 1, dans lequel le conduit d'entrée comprend :
une plaque de recouvrement perforée (79) montée par-dessus l'ouverture (74) dans le carter tournant (18) ;
un conduit intégrée (76) alignée avec l'ouverture et s'étendant depuis la surface interne du carter tournant jusqu'à une extrémité ouverte adjacente à l'entrée du moteur (80) ;
un joint (78) fixé à l'extrémité ouverte du conduit, configuré pour connecter de manière étanche le conduit à l'entrée du moteur lors de la rotation du carter dans la position fermée.

8. Ensemble de cône arrière (10) selon la revendication 1, comportant en outre un carter substantiellement conique (20) fixé à la deuxième extrémité axiale de l'élément de support (14) s'étendant depuis une extrémité avant approximativement adjacente à l'échappement du moteur jusqu'à une extrémité arrière ouverte (21), le carter fournissant ainsi un passage pour le gaz d'échappement du moteur.

9. Ensemble de cône arrière (10) selon la revendication 8, dans lequel le carter conique comprend en outre :
une cloison de séparation (86) dans l'extrémité avant du carter, connectée de manière étanche à l'échappement du moteur ; et
des chicanes (89) pour la suppression du bruit de l'échappement.

10. Ensemble de cône arrière (10) selon la revendication 9, dans lequel ledit carter conique (20) est fabriqué en un matériau composite en nid d'abeilles, comprenant un coeur en nid d'abeilles et des couches composites renforcées par des fibres recouvrant ledit coeur en nid d'abeilles, lesdites couches composites comprenant des fibres de carbone et une matrice plastique, ladite matrice plastique étant sélectionnée parmi un groupe comprenant les matières plastiques à base de bismaléimide et de polyimide.
